# EUROPEAN PATENT SPECIFICATION

(11) **EP 4 305 294 B1**
(45) Date of publication and mention of the grant of the patent: **31.07.2024**
(21) Application number: 22705779.1
(22) Date of filing: 15.02.2022
(51) Int. Cl.: F03B 11/00, C02F 1/72, F03B 15/02

(54) **HYDROELECTRIC TURBINE INSTALLATION AND OPERATION METHOD FOR ENHANCING THE LEVEL OF DISSOLVED OXYGEN**
WASSERKRAFTTURBINENANLAGE UND BETRIEBSVERFAHREN ZUR ERHÖHUNG DES GEHALTS AN GELÖSTEM SAUERSTOFF
INSTALLATION DE TURBINE HYDROÉLECTRIQUE ET PROCÉDÉ DE FONCTIONNEMENT POUR AMÉLIORER LE NIVEAU D'OXYGÈNE DISSOUS

(30) Priority: 11.03.2021 US 202163159546 P
(43) Date of publication of application: 17.01.2024
(73) Proprietor: Voith Patent GmbH, 89522 Heidenheim (DE)
(72) Inventor: COULSON, Stuart, Seven Valleys, Pennsylvania 17360 (US); MC HALE, Steve, Harrisburg, Pennsylvania 17102 (US)
(74) Representative: Voith Patent GmbH - Patentabteilung
(86) International application number: PCT/EP2022/053602
(87) International publication number: WO 2022/189101

(56) References cited:
- WO-A1-2019/059793
- WO-A2-2008/060158
- US-A- 5 823 740
- US-B2- 10 323 620

## Description

The present invention relates generally to hydroelectric turbine installations. More particularly, this invention pertains to hydroelectric installations with means for introducing oxygen containing gas into the water passing through the installation.

Dissolved oxygen is required to sustain aquatic life. Depending on the species, the threshold value may be 6mg/l of dissolved oxygen or greater. In warmer periods with little river flow the dissolved oxygen stratifies in the reservoir upstream of the turbine and turbine inlet flow could be very low in dissolved oxygen (in some extreme cases levels of 0 mg/l have been recorded).

The level of dissolved oxygen in water passing a hydroelectric turbine installation depends of course on the amount of oxygen containing gas which is introduced into the water passing through the installation. Therefore the focus of prior art solutions for enhancing the amount of dissolved oxygen is on establishing means to ensure that the amount of introduced gas is high enough.

US 10 323 620 B2 discloses a hydroelectric turbine installation comprising means for introducing oxygen containing gas into water passing through the installation during operation.

WO 2019/179742 A1 describes a runner of a hydroelectric turbine or pump with improved level of dissolved oxygen when backpressure increases. This is achieved by altering the geometry near the trailing edge of the runner to create a local drop in pressure on the trailing edge surface. The described runner comprises openings in the trailing edge surface to admit gas to the passing fluid during operation of the runner. The profile of the suctions side surface at the location of the openings is concave.

The inventors realized that there are other factors besides the amount of introduced gas which can influence the level of dissolved oxygen. When the gas is introduced into the water bubbles are formed. Oxygen is dissolved into the water by crossing the surface of the bubbles. For a given amount of gas introduced into the water the dissolving rate of oxygen will be proportional to the total surface of the generated bubbles. It is clear that the total surface of the generated bubbles is larger for smaller bubbles compared to larger bubbles. But the task is not done, when the generated bubbles are small at the point of time when the bubbles are formed. Bubbles in uniform water flows have the tendency to coalesce and to form in this way larger bubbles. Since the water flow in hydroelectric turbine installations at flow rates close to the optimum efficiency point is very uniform the effect of bubbles coalescing has a big negative impact on the level of dissolved oxygen. Since the main purpose of such hydroelectric turbine installations is to maximize electric power production, the operation conditions are normally controlled in a way to be as close to the optimum efficiency point as possible.

The objective of the present invention is to increase the level of dissolved oxygen downstream of the turbine over the level of dissolved oxygen achieved by state of the art when the turbine is operating at flow rates close to the optimum efficiency point.

The problem is solved by a hydroelectric turbine installation and a method according to the independent claims. Other favorable implementations of the invention are disclosed in the depended claims.

The invention will hereinafter be described in conjunction with the appended drawings:
Fig.1 Hydroelectric turbine installation according to the present invention;
Fig.2 Another embodiment of the present invention;
Fig.3 Perforated cover plates;
Fig. 4 Flow chart of the method according to the present invention;
Fig. 5 Data carrier.

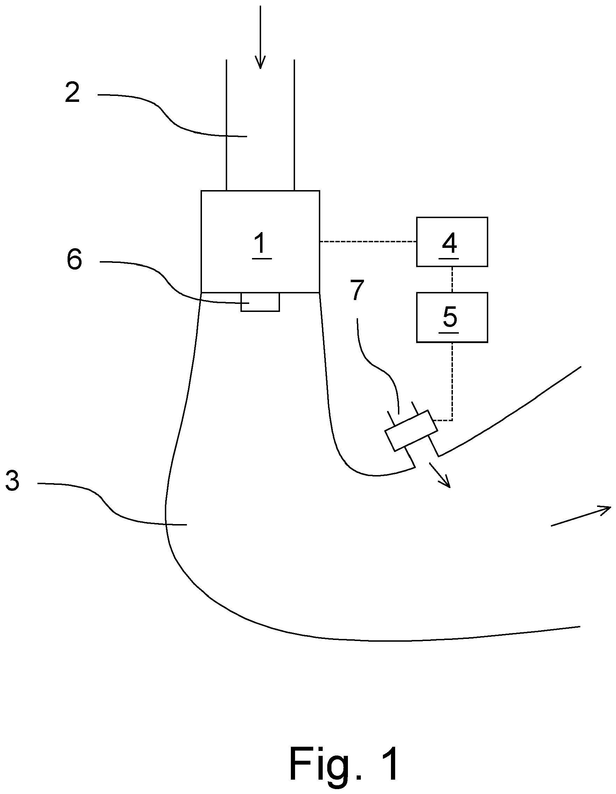

Figure 1 displays very schematically a hydroelectric turbine installation according to the present invention. The installation comprises a turbine designated as 1, a water passage located upstream of the turbine 1 and designated as 2, a draft tube located downstream of the turbine 1 and designated as 3 and means for controlling the operation conditions of the turbine 1 designated as 4. The installation comprises means for introducing oxygen containing gas into the water passing through the installation during operation of the turbine 1. These means are designated as 6. Means 6 can be located in any part of the installation such as turbine runner, wicked gates, draft tube 3 etc. The installation comprises further means for injecting water into the draft tube 3, whereas the injected water passes through one or more openings in the wall of the draft tube. In Figure 1 the means for injecting water into the draft tube 3 are designated as 7. The one or more openings are located downstream of the means 6 for introducing oxygen containing gas into the water passing through the installation.

The installation comprises further means for controlling the flowrate of the water injected into the draft tube 3. These means comprise a control-unit designated by 5 and a valve. The control-unit 5 is designed to control the flowrate of the water injected into the draft tube 3 by controlling the valve position. By changing the valve position the control-unit 5 is varying the flowrate of the water injected into the draft tube 3. The control-unit 5 is further designed to control the flowrate of the water injected into the draft tube 3 in a way that the flowrate is a function of the operation conditions of the turbine, whereas the flowrate of the water injected into the draft tube 3 is higher when the operation conditions of the turbine are at or near the optimum efficiency point compared to operation conditions being away from the optimum efficiency point. To establish such a control of the flowrate of the water injected into the draft tube 3 the control-unit 5 is connected to the means 4 for controlling the operation conditions of the turbine 1. Of course means 4 and control-unit 5 can also be combined forming a single steering unit of a hydroelectric turbine installation according to the present invention.

The inventors have realized that by injecting a jet of water into the draft tube at operation conditions at or near the optimum efficiency point the smooth flow that occurs at these operation conditions is disturbed in order to shear air bubbles into smaller bubbles and cause re-circulations that will increase bubble travel time and thus increasing dissolved oxygen for a given gas/water volume fraction.

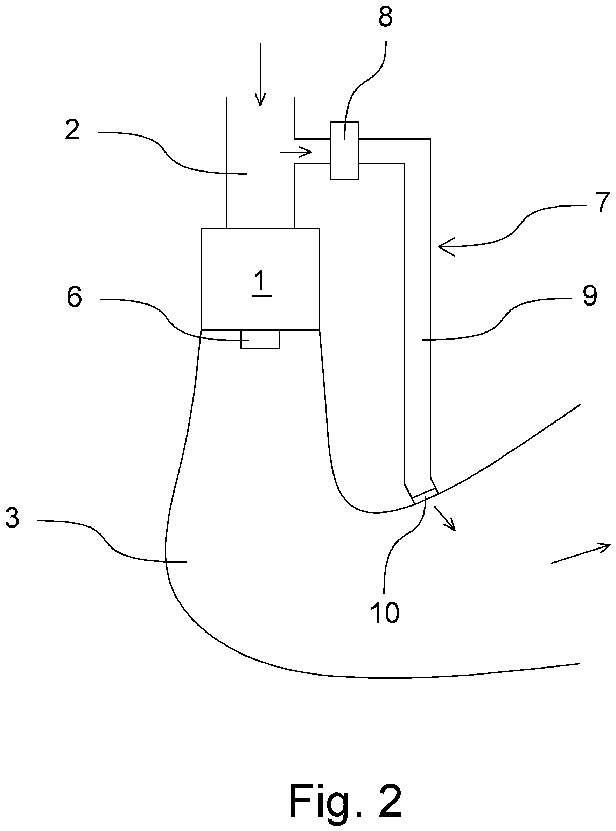

Figure 2 shows another embodiment of the present invention. The means 7 for injecting water into the draft tube 3 comprise a water channel linking the water passage 2 located upstream of the turbine 1 to the draft tube 3. The water channel is designated as 9. The means 7 for injecting water into the draft tube 3 comprise further a valve, which is designated by 8 and which is located near the branching point from the water passage 2. The valve 8 can be located anywhere within the water channel 9. The purpose of the valve 8 is to control the water flow through the water channel 9. At the outlet of the water channel 9 into the draft tube a perforated cover plate is located, which is designated as 10. For the sake of simplicity means 4 for controlling the operation conditions of the turbine 1 and the control-unit 5 are not shown in figure 2.

When the valve 8 is opened high pressure water from the water passage 2 enters the water channel 9 and is injected into the draft tube 3 via the one or more perforations of the cover plate 10. In this way one or more crossflow water jets are directed into the draft tube flow to cause the desired flow disturbance.

It is of advantage that the outlet of the water channel 9 is located on the upper part of the draft tube 3 since this generates a larger volume of disturbed flow in the draft tube by impacting the downstream flow characteristics and thus has a larger impact on bubble shear and bubble travel time within the draft tube.

The water flowing through the water channel 9 into the draft tube 3 does not participate in the production of electric energy. It is therefore of advantage that the valve 8 is only opened when crossflow water jets are needed to increase the level of dissolved oxygen above the desired value. This is the case when the operation conditions of the turbine 1 are at or near the optimum efficiency point. The control-unit 5 is designed to control the flowrate of the water injected into the draft tube 3 in a way that the flowrate is a function of the operation conditions of the turbine. The simplest function achieving the desired behavior is therefore a plateau-shaped function varying from zero flowrate to a maximal flowrate (plateau value), whereas the plateau is located in a region of operation conditions around the optimum efficiency point. The function could also be a smooth function varying from zero flowrate to a maximal flowrate, whereas the maximal flowrate is reached at least at the optimum efficiency point. Alternatively the maximal flowrate could also be located at an operation condition corresponding not exactly to the optimal efficiency point of the turbine (that means, that the flowrate exactly at the optimal efficiency point could be slightly smaller than the maximal flowrate). In any case according to the present invention there has to be one or more operation conditions of the turbine corresponding not to the optimal efficiency point of the turbine, where the flowrate set by the control-unit 5 is lower than the flowrate set by the control-unit 5 at the optimal efficiency point of the turbine.

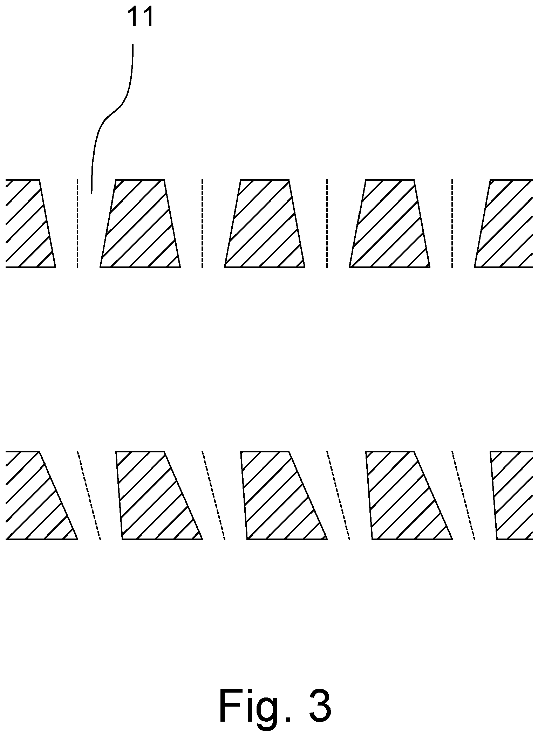

Figure 3 shows cover plates in two different embodiments according to the present invention. In the embodiment shown on the upper part of figure 3 the cover plate comprises a plurality of perforations which are shaped like conical nozzles whereas the axes of the cones (dashed lines) are oriented perpendicular to the inner surface of the cover plate. The phrase inner surface relates to the surface of the cover plate which is orientated towards the inner of the draft tube. One of the perforations is designated as 11. The injected water jets will enter the draft tube in the direction of the axes of the cones. In the embodiment shown on the lower part of figure 3 the axes of the cones are inclined to the perpendicular direction by a non-zero angle. In this way the injected water jets can have a velocity-component which is orientated up- or downstream of the water flow within the draft tube. It is also possible that the injected water jets can have a tangential velocity-component related to the water flow within the draft tube. The embodiments shown in figure 3 are examples of a large number of possible embodiments according to the present invention. In other embodiments the perforations 11 could be for example shaped differently. In other embodiments the axes of the perforations 11 could be non-uniformly orientated to establish different entrance angles for the different injected water jets. Of course the surface of the cover plate facing inside the draft tube has not to be perfectly flat. It is of advantage that this surface of the cover plate forms a smooth junction with the inner surface of the draft tube.

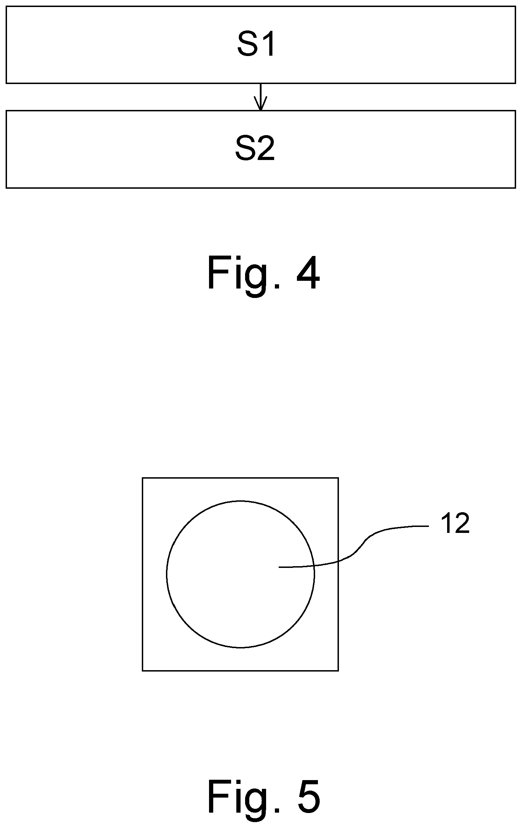

Figure 4 shows a flow chart of the method according to the present invention. The method is a method for operating a hydraulic turbine installation according to the present invention as described in the passages above. The method comprises at least two steps which are designated in figure 4 as S1 and S2. In step S1 the operation conditions of the turbine are set by the means for controlling the operation conditions of the turbine. In step S2 the control-unit sets the flowrate of the water injected into the draft tube whereas the flowrate is a function of the operation conditions set in step S1 as described above.

The present application is also related to a computer program designed to perform the steps of the described operation method. The present application is also related to a data carrier on which the computer program is stored. Figure 5 shows a data carrier, which is designated by 12.

### List of references

- 1: Turbine
- 2: Water passage located upstream of the turbine
- 3: Draft tube
- 4: Means for controlling the operation conditions of the turbine
- 5: Control-unit
- 6: Means for introducing oxygen containing gas into the passing water
- 7: Means for injection water into the draft tube
- 8: Valve
- 9: Water channel
- 10: Cover plate
- 11: Perforation
- 12: Data carrier

## Claims

1. Hydroelectric turbine installation comprising a turbine (1), a water passage (2) located upstream of the turbine (1), a draft tube (3) located downstream of the turbine (1), means (4) for controlling operation conditions of the turbine (1), means (6) for introducing oxygen containing gas into water passing through the installation during operation of the turbine (1), means (7) for injecting water into the draft tube (3), whereas the injected water passes through one or more openings in the wall of the draft tube (3) and means for controlling a flowrate of the water injected into the draft tube (3), whereas the means for controlling the flowrate of the water injected into the draft tube (3) comprise a control-unit (5) and a valve (8), and whereas the control-unit (5) is designed to control the flowrate of the water injected into the draft tube (3) in a way that the flowrate is a function of the operation conditions of the turbine (1), and
**characterised in that**
the flowrate set by the control-unit (5) at an operation condition of the turbine (1) corresponding to an optimal efficiency point of the turbine (1) is higher than a flowrate set by the control-unit (5) at one or more other operation conditions of the turbine (1) corresponding not to an optimal efficiency point of the turbine (1).

2. Hydroelectric turbine installation of claim 1, whereas the means (7) for injecting water into the draft tube (3) comprise a water channel (9) linking the water passage (2) located upstream of the turbine (1) to the draft tube (3) and a perforated cover plate (10), which is located at an outlet of the water channel (9) into the draft tube (3).

3. Hydroelectric turbine installation of claim 2, whereas the outlet of the water channel (9) is located on the upper part of the draft tube (3).

4. Hydroelectric turbine installation of claim 2 or 3, whereas the perforated cover plate (10) comprises one or more perforations (11) which are shaped like conical nozzles.

5. Hydroelectric turbine installation of claim 4, whereas an axis of the one or more perforations (11) is orientated perpendicular to an inner surface of the cover plate (10).

6. Hydroelectric turbine installation of claim 4, whereas an axis of the one or more perforations (11) is inclined to the perpendicular direction to an inner surface of the cover plate (10) by a non-zero angle.

7. Hydroelectric turbine installation according to one of the preceding claims, whereas the function is a plateau-shaped varying from zero flowrate to a maximal flowrate, whereas the region with maximal flowrate is located at operation conditions around the optimum efficiency point.

8. Hydroelectric turbine installation according to one of claims 1 to 6,
whereas the function varying from zero flowrate to a maximal flowrate, whereas the maximal flowrate is reached at least at the optimum efficiency point.

9. Method for operating a hydroelectric turbine installation comprising a turbine (1), a water passage (2) located upstream of the turbine (1), a draft tube (3) located downstream of the turbine (1), means (4) for controlling operation conditions of the turbine (1), means (6) for introducing oxygen containing gas into water passing through the installation during operation of the turbine (1), means (7) for injecting water into the draft tube (3), whereas the injected water passes through one or more openings in the wall of the draft tube (3) and means for controlling a flowrate of the water injected into the draft tube (3), whereas the means for controlling a flowrate of the water injected into the draft tube (3) comprise a control-unit (5) and a valve (8), and whereas the control-unit (5) is designed to control the flowrate of the water injected into the draft tube (3), and whereas the method comprises the following steps:
S1: The operation conditions of the turbine (1) are set by the means (4) for controlling the operation conditions of the turbine (1);
S2: The control-unit (5) sets the flowrate of the water injected into the draft tube (3), whereas the flowrate is a function of the operation conditions of the turbine (1);
and whereas the flowrate set by the control-unit (5) at an operation condition of the turbine (1) corresponding to an optimal efficiency point of the turbine (1) is higher than a flowrate set by the control-unit (5) at one or more other operation condition of the turbine (1) corresponding not to an optimal efficiency point of the turbine (1).

10. Computer program comprising instructions which, when the program is executed by a computer, cause the hydroelectric turbine installation of claim 1 to perform the steps of the operation method of claim 9.

11. Data carrier (12), on which the computer program of claim 10 is stored.

## Patentansprüche

1. Wasserkraftturbinenanlage mit einer Turbine (1), einem stromaufwärts der Turbine (1) angeordneten Wasserdurchlass (2), einem stromabwärts der Turbine (1) angeordneten Saugrohr (3), Mitteln (4) zur Steuerung der Betriebsbedingungen der Turbine (1), Mittel (6) zum Einleiten von sauerstoffhaltigem Gas in Wasser, das während des Betriebs der Turbine (1) durch die Anlage strömt, Mitteln (7) zum Einspritzen von Wasser in das Saugrohr (3), wobei das eingespritzte Wasser durch eine oder mehrere Öffnungen in der Wand des Saugrohrs (3) strömt, und Mitteln zum Steuern einer Durchflussmenge des in das Saugrohr (3) eingespritzten Wassers, wobei die Mittel zur Steuerung der Durchflussmenge des in das Saugrohr (3) eingespritzten Wassers eine Steuereinheit (5) und ein Ventil (8) umfassen, und wobei die Steuereinheit (5) so ausgelegt ist, dass sie die Durchflussmenge des in das Saugrohr (3) eingespritzten Wassers so steuert, dass die Durchflussmenge eine Funktion der Betriebsbedingungen der Turbine (1) ist, und **dadurch gekennzeichnet, dass** die von der Steuereinheit (5) bei einem Betriebszustand der Turbine (1), der einem optimalen Wirkungsgradpunkt der Turbine (1) entspricht, eingestellte Durchflussmenge höher ist als eine Durchflussmenge, die von der Steuereinheit (5) bei einem oder mehreren anderen Betriebszuständen der Turbine (1), die nicht einem optimalen Wirkungsgradpunkt der Turbine (1) entsprechen, eingestellt wird.

2. Wasserkraftturbinenanlage nach Anspruch 1, wobei die Mittel (7) zum Einspritzen von Wasser in das Saugrohr (3) einen Wasserkanal (9), der den stromaufwärts der Turbine (1) gelegenen Wasserkanal (2) mit dem Saugrohr (3) verbindet, und eine perforierte Abdeckplatte (10) umfassen, die sich an einem Auslass des Wasserkanals (9) in das Saugrohr (3) befindet.

3. Wasserkraftturbinenanlage nach Anspruch 2, wobei sich der Auslass des Wasserkanals (9) am oberen Teil des Saugrohrs (3) befindet.

4. Wasserkraftturbinenanlage nach Anspruch 2 oder 3, wobei die perforierte Deckplatte (10) eine oder mehrere Perforationen (11) aufweist, die wie konische Düsen geformt sind.

5. Wasserkraftturbinenanlage nach Anspruch 4, wobei eine Achse der einen oder mehreren Perforationen (11) senkrecht zu einer Innenfläche der Deckplatte (10) ausgerichtet ist.

6. Wasserkraftturbinenanlage nach Anspruch 4, wobei eine Achse der einen oder mehreren Perforationen (11) um einen von Null verschiedenen Winkel zur Senkrechten auf eine Innenfläche der Deckplatte (10) geneigt ist.

7. Wasserkraftturbinenanlage nach einem der vorhergehenden Ansprüche, wobei die Funktion plateauförmig ist und von einem Durchfluss von Null bis zu einem maximalen Durchfluss variiert, wobei der Bereich mit maximalem Durchfluss bei Betriebsbedingungen um den optimalen Wirkungsgradpunkt herum liegt.

8. Wasserturbinenanlage nach einem der Ansprüche 1 bis 6, wobei die glatte Funktion von einem Durchfluss von Null bis zu einem maximalen Durchfluss reicht, wobei der maximale Durchfluss mindestens am Punkt des optimalen Wirkungsgrades erreicht wird.

9. Verfahren zum Betreiben einer hydroelektrischen Turbinenanlage mit einer Turbine (1), einem stromaufwärts der Turbine (1) angeordneten Wasserkanal (2), einem stromabwärts der Turbine (1) angeordneten Saugrohr (3), Mitteln (4) zum Steuern der Betriebsbedingungen der Turbine (1), Mitteln (6) zum Einleiten von sauerstoffhaltigem Gas in das während des Betriebs der Turbine (1) durch die Anlage strömende Wasser, Mitteln (7) zum Einspritzen von Wasser in das Saugrohr (3), wobei das eingespritzte Wasser durch eine oder mehrere Öffnungen in der Wand des Saugrohrs (3) strömt, und Mittel zum Steuern einer Durchflussmenge des in das Saugrohr (3) eingespritzten Wassers, wobei die Mittel zum Steuern einer Durchflussmenge des in das Saugrohr (3) eingespritzten Wassers eine Steuereinheit (5) und ein Ventil (8) umfassen, und wobei die Steuereinheit (5) dazu bestimmt ist, die Durchflussmenge des in das Saugrohr (3) eingespritzten Wassers zu steuern, und wobei das Verfahren die folgenden Schritte umfasst:
S1: Die Betriebsbedingungen der Turbine (1) werden durch die Mittel (4) zur Steuerung der Betriebsbedingungen der Turbine (1) eingestellt;
S2: Die Steuereinheit (5) stellt die Durchflussmenge des in das Saugrohr (3)
eingespritzten Wassers ein, wobei die Durchflussmenge eine Funktion der Betriebsbedingungen der Turbine (1) ist;
und wobei die von der Steuereinheit (5) eingestellte Durchflussmenge bei einer Betriebsbedingung der Turbine (1), die einem optimalen Wirkungsgradpunkt der Turbine (1)
entspricht, höher ist als eine Durchflussmenge, die von der Steuereinheit (5) bei einer oder mehreren anderen Betriebsbedingungen der Turbine (1) eingestellt wird, die nicht einem optimalen Wirkungsgradpunkt der Turbine (1) entsprechen.

10. Computerprogramm mit Anweisungen, die, wenn das Programm von einem Computer ausgeführt wird, die Wasserturbinenanlage nach Anspruch 1 veranlassen, die Schritte des Betriebsverfahrens nach Anspruch 9 durchzuführen.

11. Datenträger (12), auf dem das Computerprogramm nach Anspruch 10 gespeichert ist.

## Revendications

1. Installation hydroélectrique comprenant une turbine (1), un passage d'eau (2) situé en amont de la turbine (1), un tube de tirage (3) situé en aval de la turbine (1), des moyens (4) pour contrôler les conditions de fonctionnement de la turbine (1), des moyens (6) pour introduire un gaz contenant de l'oxygène dans l'eau traversant l'installation pendant le fonctionnement de la turbine (1), des moyens (6) pour introduire un gaz contenant de l'oxygène dans l'eau traversant l'installation pendant le fonctionnement de la turbine (1), des moyens (7) pour injecter de l'eau dans le tube de tirage (3), l'eau injectée passant par une ou plusieurs ouvertures dans la paroi du tube de tirage (3) et des moyens pour contrôler le débit de l'eau injectée dans le tube de tirage (3), considérant que les moyens de contrôle du débit de l'eau injectée dans le tube de tirage (3) comprennent une unité de contrôle (5) et une vanne (8), et que l'unité de contrôle (5) est conçue pour contrôler le débit de l'eau injectée dans le tube de tirage (3) de manière à ce que le débit soit fonction des conditions de fonctionnement de la turbine (1), et **caractérisé en ce que** le débit fixé par l'unité de commande (5) dans une condition de fonctionnement de la turbine (1) correspondant à un point de rendement optimal de la turbine (1) est plus élevé que le débit fixé par l'unité de commande (5) dans une ou plusieurs autres conditions de fonctionnement de la turbine (1) ne correspondant pas à un point de rendement optimal de la turbine (1).

2. Installation de turbine hydroélectrique selon la revendication 1, alors que les moyens (7) pour injecter de l'eau dans le tube de tirage (3) comprennent un canal d'eau (9) reliant le passage d'eau (2) situé en amont de la turbine (1) au tube de tirage (3) et une plaque de couverture perforée (10), qui est située à une sortie du canal d'eau (9) dans le tube de tirage (3).

3. Installation de turbine hydroélectrique selon la revendication 2, la sortie du canal d'eau (9) étant située sur la partie supérieure du tube de tirage (3).

4. Installation de turbine hydroélectrique selon la revendication 2 ou 3, la plaque de recouvrement perforée (10) comprenant une ou plusieurs perforations (11) en forme de buses coniques.

5. Installation de turbine hydroélectrique selon la revendication 4, alors qu'un axe d'une ou plusieurs perforations (11) est orienté perpendiculairement à une surface intérieure de la plaque de couverture (10).

6. Installation de turbine hydroélectrique selon la revendication 4, l'axe d'une ou plusieurs perforations (11) étant incliné d'un angle non nul par rapport à la direction perpendiculaire à la surface intérieure de la plaque de recouvrement (10).

7. Installation de turbine hydroélectrique selon l'une des revendications précédentes, alors que la fonction est un plateau variant d'un débit nul à un débit maximal, alors que la région de débit maximal est située dans des conditions de fonctionnement autour du point d'efficacité optimale.

8. Installation de turbine hydroélectrique selon l'une des revendications 1 à 6, la fonction de lissage variant d'un débit nul à un débit maximal, le débit maximal étant atteint au moins au point d'efficacité optimale.

9. Procédé d'exploitation d'une installation de turbinage hydroélectrique comprenant une turbine (1), un passage d'eau (2) situé en amont de la turbine (1), un tube de tirage (3) situé en aval de la turbine (1), des moyens (4) de contrôle des conditions de fonctionnement de la turbine (1), des moyens (6) d'introduction d'un gaz contenant de l'oxygène dans l'eau traversant l'installation pendant le fonctionnement de la turbine (1), des moyens (7) d'injection d'eau dans le tube de tirage (3), considérant que l'eau injectée passe à travers une ou plusieurs ouvertures dans la paroi du tube de tirage (3) et des moyens pour contrôler le débit de l'eau injectée dans le tube de tirage (3), considérant que les moyens pour contrôler le débit de l'eau injectée dans le tube de tirage (3) comprennent une unité de contrôle (5) et une vanne (8), et considérant que l'unité de contrôle (5) est conçue pour contrôler le débit de l'eau injectée dans le tube de tirage (3), et considérant que la méthode comprend les étapes suivantes :
S1 : Les conditions de fonctionnement de la turbine (1) sont réglées par le moyen (4) de contrôle des conditions de fonctionnement de la turbine (1) ;
S2 : L
'unité de commande (5) règle le débit de l'eau injectée dans le tube de tirage (3), alors que le débit est fonction des conditions de fonctionnement de la turbine (1) ;
et alors que le débit réglé par l'unité de commande (5) à une condition de fonctionnement de la turbine (1) correspondant à un point de rendement optimal de la turbine (1) est supérieur à un débit réglé par l'unité de commande (5) à une ou plusieurs autres conditions de fonctionnement de la turbine (1) ne correspondant pas à un point de rendement optimal de la turbine (1).

10. Programme d'ordinateur comprenant des instructions qui, lorsque le programme est exécuté par un ordinateur, font que l'installation de turbine hydroélectrique de la revendication 1 exécute les étapes de la méthode d'opération de la revendication 9.

11. Support de données (12), sur lequel est stocké le programme informatique de la revendication 10.
